# EUROPEAN PATENT SPECIFICATION

(11) **EP 3 599 382 B1**
(45) Date of publication and mention of the grant of the patent: **27.07.2022**
(21) Application number: 19185729.1
(22) Date of filing: 11.07.2019
(51) Int. Cl.: F15B 11/00, F15B 11/044, F15B 11/05, F15B 11/042

(54) **HYDRAULIC SYSTEM AND METHOD FOR CONTROLLING THE SPEED AND PRESSURE OF A HYDRAULIC CYLINDER**
HYDRAULIKSYSTEM UND VERFAHREN ZUR STEUERUNG DER GESCHWINDIGKEIT UND DES DRUCKS EINES HYDRAULIKZYLINDERS
SYSTÈME HYDRAULIQUE ET PROCÉDÉ DE COMMANDE DE LA VITESSE ET DE LA PRESSION D'UN VÉRIN HYDRAULIQUE

(30) Priority: 23.07.2018 SE 1850933
(43) Date of publication of application: 29.01.2020
(73) Proprietor: JOAB FÖRSÄLJNINGS AB, 41729 Göteborg (SE)
(72) Inventor: KARLSSON, Rikard, 668 94 Bäckefors (SE); JANSSON, Tommy, 531 52 Lidköping (SE)
(74) Representative: Zacco Sweden AB

(56) References cited:
- EP-A1- 2 016 818
- WO-A1-2005/005842
- DE-A1- 10 340 506

## Description

### TECHNICAL FIELD

The invention relates to a method for controlling the speed and pressure of a hydraulic cylinder in a hydraulic system and to a hydraulic system. The system comprises a hydraulic cylinder fluidly connected to a load-holding valve arrangement comprising a first load-holding proportional valve connected to a first end of the hydraulic cylinder and a second load-holding proportional valve connected to a second end of the hydraulic cylinder. The system further comprises a flow-control valve arrangement comprising a directional proportional flow-control valve and at least one hydraulic pump.

### BACKGROUND ART

Today, hydraulic movement is normally achieved by using a combustion engine or electric motor as the source for providing hydraulic power to a system. A number or applications require a cylinder to move over centre using over centre valves. Today's solutions cause energy to be spent even when a cylinder is moving without any external loads.

When using a vehicle such as a forklift, a method known as gravity lowering or gravity assist is used for the downward movement of the forks. This method uses gravity acting on the load to move the load that the forklift holds and makes the movement downwards energy efficient.

However, when moving a load that changes from pushing a load to pulling a load due to the geometry in the construction, all systems known today are designed with some type of over centre valve. These valves control the load by holding a constant differential pressure over the cylinders first and second ends. This differential pressure will be the lost energy when moving cylinders without any load.

EP 2 016 818 A1 discloses a hoisting unit for a mobile working unit such as a tractor. The hoisting unit comprises at least one lower linkage arrangement and a pressure controlled hydraulic upper linkage. Pressure chambers of the upper linkage arrangement are connected to a pump or tank via a directional control valve arrangement. A locking unit is located at the upper linkage arrangement and includes a releasable check valve. Control of the upper linkage arrangement is performed by a single proportional valve, via which the pressure chambers can be connected to the tank or to the pump. Pressure transducers required for pressure regulation to detect the pressure in the respective pressure chamber are arranged in the pressure medium flow path between the upper linkage arrangement pressure chambers and the directional control valve arrangement.

In short, there is thus a general need for improvements in the field of hydraulic systems and methods for controlling the movement of a hydraulic cylinder.

### SUMMARY OF THE INVENTION

An object of this invention is to provide a method for controlling the speed of a hydraulic cylinder and a hydraulic system that addresses the problems described above. This object is achieved by the technical features contained in the characterizing portion of independent claims 1 and 4. The dependent claims contain advantageous embodiments, further developments and variants of the invention.

The invention relates to a method for controlling the speed of a hydraulic cylinder in a hydraulic system. The system comprises a hydraulic cylinder fluidly connected to a load-holding valve arrangement comprising a first load-holding valve connected to a first end of the hydraulic cylinder and a second load-holding valve connected to a second end of the hydraulic cylinder. The system further comprises a flow-control valve arrangement comprising a directional flow-control valve and at least one hydraulic pump. The method comprises:
- inputting a desired extension or retraction speed for the hydraulic cylinder by means of an operator controller,
- measuring a working pressure within the hydraulic system, and
- measuring a speed of the hydraulic cylinder,
- depending on the measured working pressure and the speed of the hydraulic cylinder,
- activating a first mode, a second mode or a third mode, wherein the extension or retraction speed of the hydraulic cylinder in each mode is controlled by adjusting the position of the flow-control valve, the first load-holding valve and the second load-holding valve, wherein the first mode is a pushing/pulling mode, the second mode is a neutral movement mode and the third mode is a gravity assisted movement mode.

One advantage with the system is that when operating the hydraulic cylinder, only the desired speed of the hydraulic cylinder is used as input from an operator. The method according to the invention allows for automatic setting of the hydraulic system into one of three modes wherein the extension or retraction speed of the hydraulic cylinder is controlled by adjusting the position of the flow-control valve, the first load-holding valve and/or the second load-holding valve. This leads to that the appropriate mode for each load situation, i.e. pushing or pulling of a load, neutral movement of a load and gravity-assisted movement of a load can be used. This leads to that the energy consumption due to providing pressure to the hydraulic system can be reduced by as much as 80 %. Another advantage is that there is no need for over-centre valves in the hydraulic system, simplifying the design of the hydraulic system.

The method of adjusting the position of the flow control valve, the first load-holding valve and the second load-holding valve comprises:
if the measured working pressure within the hydraulic system is lower than a first pressure needed to move the hydraulic cylinder at the desired extension or retraction speed,
- activating the first mode wherein a load from the cylinder is identified to determine the first pressure, the position of the flow-control valve is adjusted to control the speed of the hydraulic cylinder, the position of the first load-holding valve is set to a closed position and the position of the second load-holding valve is set to a fully open position. In the first mode, the directional flow-control valve is used for speed control and the second load-holding valve is opened to a fully open positon for minimal energy loss throughout the system. This corresponds to a mode where additional pressure is required to move the cylinder at the desired speed, either for pushing or for pulling a load. This includes vertical and/or horizontal movement of the load being pushed or pulled.

The method of adjusting the position of the flow control valve, the first load-holding valve and the second load-holding valve comprises:
if the measured working pressure decreases, and if the speed of the hydraulic cylinder is constant or increasing relative the desired extension or retraction speed ,
- activating the second mode wherein the position of the flow-control valve and the first load-holding valve is adjusted to control the speed of the hydraulic cylinder and the position of the second load-holding valve is set to a closed position. In the second mode, which is set when less pressure is needed as the cylinder works in light conditions, i.e. when a load attached to the hydraulic cylinder has passed centre but is still close to centre, the first load-holding valve starts to control the speed of the cylinder, together with the directional flow-control valve. The system can also be said to work in hybrid mode as both the directional flow-control valve and the first load-holding valve controls the speed of the cylinder.

The method of adjusting the position of the flow control valve, the first load-holding valve and the second load-holding valve comprises:
if the measured working pressure and the speed of the cylinder indicates that the hydraulic system moves by its own weight,
- activating the third mode wherein the position of the flow-control valve is set to centre and the first load-holding valve is adjusted to control the speed of the hydraulic cylinder and the position of the second load-holding valve is set to a fully open position. When the directional control valve is fully open and the measured working pressure is lower than a pre-set pressure for the desired speed of the cylinder, this indicates that the hydraulic cylinder moves by its own weight or is said to be gravity assisted. This sets the third mode, in which the directional flow-control valve is set to centre, the first load-holding valve is adjusted to control the speed of the hydraulic cylinder and the position of the second load-holding valve is set to a fully open position.

The system may further comprise a proportional pressure limiter, wherein the method further comprises:
- adjusting the system pressure by means of the proportional pressure limiter. In the first mode, the pressure can be adjusted to different values by using the proportional pressure limiter. Depending on the direction of the movement of the hydraulic cylinder or the position of the hydraulic cylinder, the pressure is adjusted to maintain a constant force on the hydraulic cylinder on both inward and outward movement of the hydraulic cylinder.

The method may further comprise:
- Transitioning seamlessly between the first, second and or third mode depending on the measured working pressure and the speed of the hydraulic cylinder. The seamless transition ensures that the appropriate mode is used at all times. A control system chooses the appropriate mode based on the above-described conditions.

The invention further relates to a hydraulic system comprising a hydraulic cylinder fluidly connected to a load-holding valve arrangement comprising a first load-holding valve connected to a first end of the hydraulic cylinder and a second load-holding valve connected to a second end of the hydraulic cylinder. The system further comprises a flow-control valve arrangement comprising a directional flow-control valve and at least one hydraulic pump, a working pressure sensor and a cylinder speed sensor. The system is configured for activating a first mode, a second mode and a third mode, wherein, in each mode, a desired extension or retraction speed of the hydraulic cylinder is controlled by adjusting the position of the flow-control valve, the first load-holding valve and the second load-holding valve, depending on a measured working pressure in the system and a measured speed of the hydraulic cylinder, wherein the first mode is a pushing/pulling mode, the second mode is a neutral movement mode and the third mode is a gravity assisted movement mode.

The hydraulic system is configured for activating the first mode if the measured working pressure within the hydraulic system is lower than a first pressure needed to move the hydraulic cylinder at the desired extension or retraction speed, wherein a load from the cylinder is identified by the system to determine a first pressure needed to move the hydraulic cylinder at a desired extension or retraction speed, the position of the flow-control valve is adjusted to control the speed of the hydraulic cylinder, the position of the first load-holding valve is set to a closed position and the position of the second load-holding valve is set to a fully open position.

The hydraulic system is configured for activating the second mode if the measured working pressure decreases and if the speed of the hydraulic cylinder is constant or increasing relative the desired extension or retraction speed, where the position of the flow-control valve and the first load-holding valve is adjusted to control the speed of the hydraulic cylinder and the position of the second load-holding valve is set to a closed position.

The hydraulic system is configured for activating the third mode if the measurement of the hydraulic cylinder indicates that it moves by its own weight, wherein the position of the flow-control valve is set to centre and the first load-holding valve is adjusted to control the speed of the hydraulic cylinder and the position of the second load-holding valve is set to a fully open position.

The system may further comprise a proportional pressure-limiting valve. The proportional pressure-limiting valve is used in the first mode. The advantages of using a proportional pressure-limiting valve are as mentioned above.

The system further may further comprise a proportional pressure limiter arranged to adjust the system pressure.

The invention also relates to a vehicle comprising a hydraulic system according to the invention.

### BRIEF DESCRIPTION OF THE DRAWINGS

Fig. 1 schematically shows a hydraulic system according to a first example embodiment with the system in an inactive state,
Fig. 2a schematically shows a hydraulic system according to a first example embodiment with the system in a first mode,
Fig. 2b schematically shows a hydraulic system according to a first example embodiment with the system in a second mode,
Fig. 2c schematically shows a hydraulic system according to a first example embodiment with the system in a third mode,
Fig. 3 schematically shows a hydraulic system according to a second example embodiment not covered by the claimed invention, with the system in an inactive state,
Fig. 4 schematically shows a hydraulic system according to a third example embodiment not covered by the claimed invention, with the system in an inactive state,
Fig. 5a schematically shows a hydraulic system according to a third example embodiment not covered by the claimed invention, with the system in a first mode,
Fig. 5b schematically shows a hydraulic system according to a third example embodiment not covered by the claimed invention, with the system in a second mode,
Fig. 5c schematically shows a hydraulic system according to a third example embodiment not covered by the claimed invention, with the system in a third mode,
Fig. 6 schematically shows a hydraulic system according to a fourth example embodiment not covered by the claimed invention, with the system in an inactive state.

### DETAILED DESCRIPTION

The hydraulic system and method described below are suitable for use with any kind of hydraulically operated equipment and/or vehicle. Examples are hook lifts, dumpers, stationary cranes, crane vehicles, forklifts, bucket loaders, front loaders, front-end loaders, payloaders, scoops, shovels, skip loaders, wheel loaders or skid loaders.

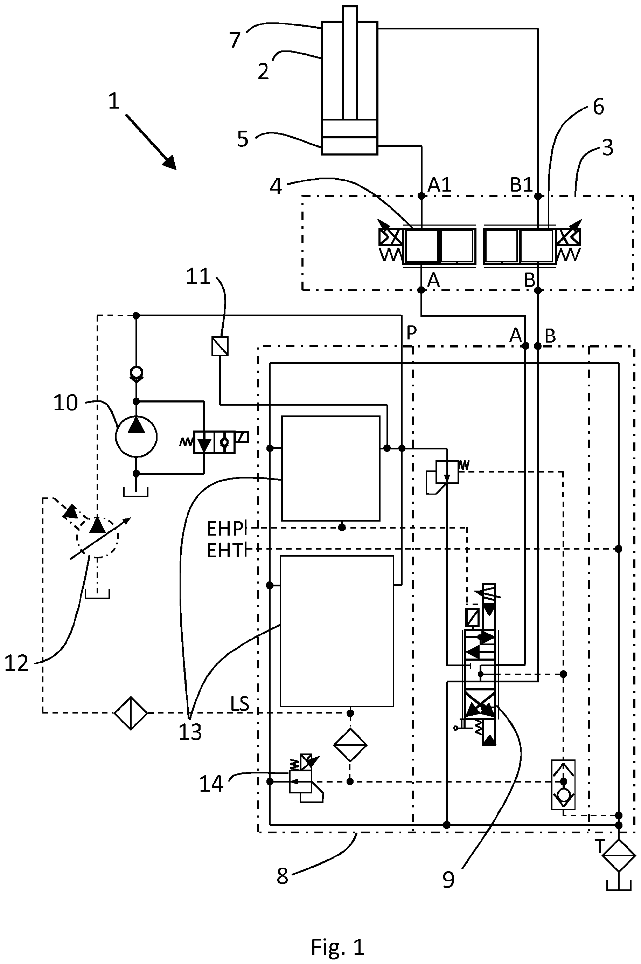

Fig.1 schematically shows a hydraulic system 1 according to a first example with the hydraulic system 1 in an inactive state. The hydraulic system 1 comprises a hydraulic cylinder 2 fluidly connected to a load-holding valve arrangement 3. The load-holding valve arrangement 3 comprises a first load-holding valve 4 connected to a first end 5 of the hydraulic cylinder 2 and a second load-holding valve 6 connected to a second end 7 of the hydraulic cylinder 2. The hydraulic system 1 further comprises a flow-control valve arrangement 8 fluidly connected to the load-holding valve arrangement 3. The flow-control valve arrangement 8 comprises a directional flow-control valve 9. The hydraulic system 1 also comprises at least one hydraulic pump 10 fluidly connected to the flow-control valve arrangement 8 and is arranged to provide hydraulic fluid flow to the hydraulic system 1. A pressure sensor 11 is attached to the pressure line from the at least one hydraulic pump 10 and measures the working pressure of the hydraulic system 1. The pressure sensor 11 may for instance be a PT sensor or a PU sensor. The hydraulic system 1 further comprises a hydraulic cylinder position and speed sensor (not shown) arranged to measure both position and movement speed of the hydraulic cylinder 2 throughout its movement. The cylinder speed sensor may for instance be an angular sensor, a linear potentiometer or pulse encoder.

The first and second load-holding valves 4, 6 of the load-holding valve arrangement 3 are electronically operated, proportional, valves, for example solenoid, 2-way, normally closed, proportional, poppet-type valves. The first and second load-holding valves may alternatively be a direct-acting, pilot-operated or servo-operated, normally open and spool-type valve.

The directional flow-control valve 9 of the flow-control valve arrangement 8 is for example a pilot operated 4/3 valve, normally closed, proportional controlled but any kind of flow-control proportional controlled valve, both poppet and spool valve, will work with the system. Another example of a directional flow-control valve 9 is shown below. Maximum flow through the flow-control valve is designed for the specific application. The flow-control valve arrangement 8 further comprises a hydraulic valve arrangement 13 arranged to protect the hydraulic system 1 and to regulate and operate pilot pressure to the flow-control valve 9 with a pilot supply line (EHP) and a pilot tank line (EHT). The hydraulic valve arrangement is not shown in further detail.

The directional flow-control valve 9 can be operated in other ways. It can e.g. be direct-acting, pilot-operated or servo-operated.

The hydraulic system 1 comprises at least one hydraulic pump 10; in this example, the hydraulic pump 10 is a fixed displacement, pressure-compensated hydraulic pump. The hydraulic system 1 may alternatively be a load-sensing hydraulic system, with a variable-displacement hydraulic pump 12 arranged to provide additional hydraulic fluid to the system based on the load sensed. Such a system is illustrated in the figures. The variable-displacement hydraulic pump 12 is indicated in dashed line to indicate that it is optional.

The hydraulic system 1 further comprises a proportional pressure limiter 14 arranged to adjust the pressure in the first mode to maintain a constant force on the hydraulic cylinder on both inward and outward movement of the hydraulic cylinder. The proportional pressure limiter is a solenoid operated two-way pressure relief valve, normally open.

The following description illustrates the functions of the hydraulic system 1 during the three different modes. It is assumed that the hydraulic cylinder 2 is operating with a load attached to the hydraulic cylinder 2 and that the hydraulic cylinder 2 has a range of motion where the load moves over centre.

The geometry of the hydraulic system 1 defines the maximum pressure for each different position of the hydraulic cylinder 2 and the pressure can be different in outwards or inwards movement. The flowrates into and out from the hydraulic cylinder 2 can be adjusted as well. The number of flowrates is only limited by the resolution of the hydraulic cylinder position and speed sensor.

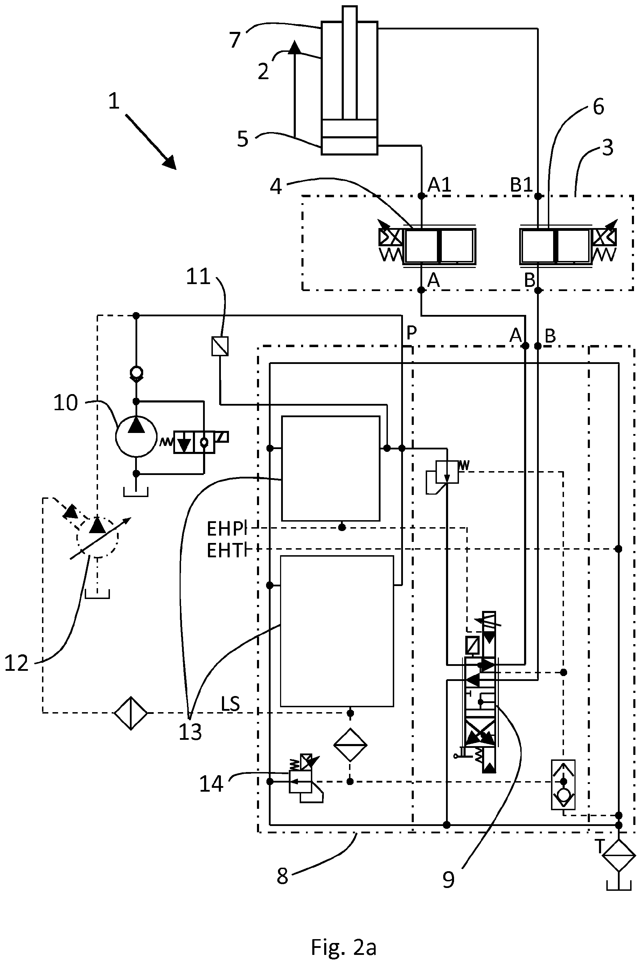

Fig. 2a schematically shows a hydraulic system 1 according to a first example with a first mode of the hydraulic system 1 activated. In the first mode, or pushing/pulling mode, an operator has input a desired extension or retraction speed for the hydraulic cylinder 2 by means of an operator controller (not shown). The working pressure in the hydraulic system 1 is measured by the pressure sensor 11. If the measured pressure is lower than a first pressure needed to move the hydraulic cylinder 2 at the desired extension or retraction speed with the load attached to it, a load from the hydraulic cylinder 2 is identified to determine the first pressure and the position of the directional flow-control valve 9 is adjusted to provide flow to extend the hydraulic cylinder 2. As the directional flow-control valve 9 is a proportional valve, the directional flow-control valve 9 is used to control the speed of the hydraulic cylinder 2. The position of the first load-holding valve 4 is set to its closed position allowing fluid to pass through to the first end 5 of the hydraulic cylinder 2. The position of the second load-holding valve 6 is set to a fully open position allowing fluid to pass through to tank.

The method can be performed in a hydraulic system with or without load-sensing. A system with load-sensing is more energy efficient than a system without, but energy usage is reduced also in a system without load-sensing.

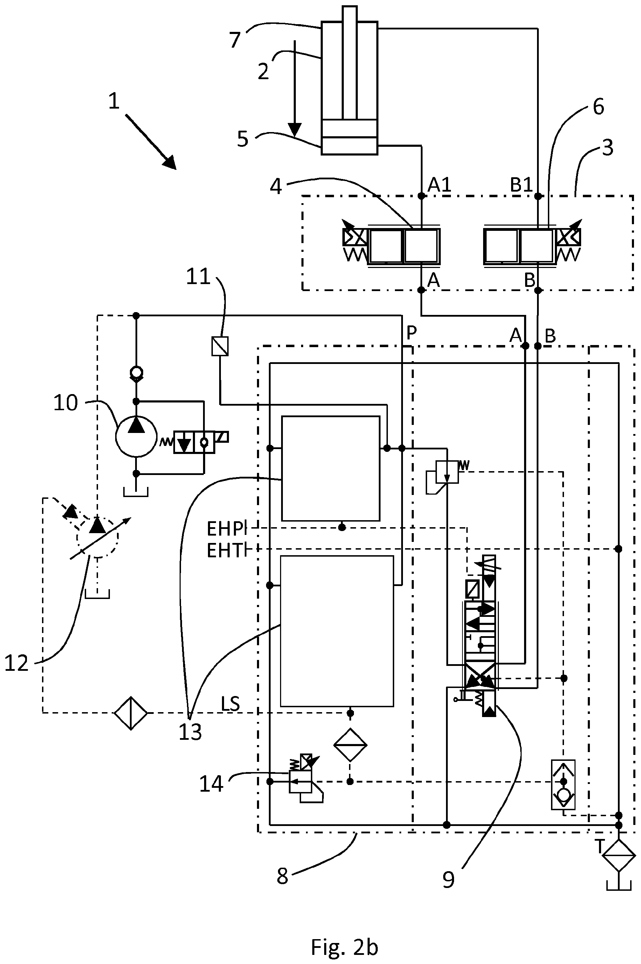

Fig. 2b schematically shows a hydraulic system 1 according to a first example with the second mode of the hydraulic system 1 activated. The second mode can also be referred to a neutral movement mode, and is used when the hydraulic cylinder 2 works in light conditions, e.g. with the load close to centre after having passed centre in a longitudinal motion in either direction.

The second mode is activated if the measured working pressure decreases, and if the speed of the hydraulic cylinder 2 is constant or increasing relative the desired extension or retraction speed input by the operator controller. In the second mode, the position of the directional flow-control valve 9 is adjusted to provide fluid to the second end 7 of the hydraulic cylinder 2. The position of the directional flow-control valve 9 and the first load-holding valve 4 are adjusted simultaneously to control the speed of the hydraulic cylinder 2 with the first load-holding valve 4 adjusting the amount of fluid passing to tank and the directional flow-control valve 9 adjusting the amount of fluid passing to the second end 7 of the hydraulic cylinder 2. The position of the second load-holding valve 6 is set to a closed position allowing fluid to pass through to the second end 7 of the hydraulic cylinder 2.

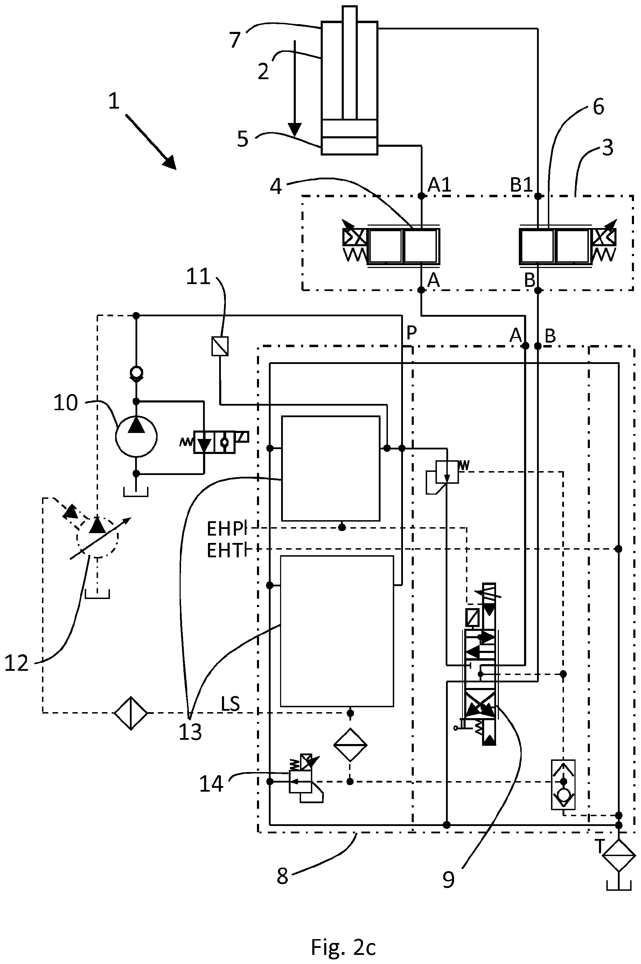

Fig. 2c schematically shows a hydraulic system 1 according to a first example with the third mode of the hydraulic system activated. The third mode is a gravity assisted movement mode and is used when the load accelerates the hydraulic cylinder 2 by means of gravity. When the directional flow-control valve 9 is fully open and the measured working pressure is lower than a pre-set pressure for the desired speed of the hydraulic cylinder 2 input by the operator controller, this indicates that the hydraulic cylinder 2 moves by its own weight or is said to be gravity assisted. The position of the directional flow-control valve 9 is set to centre and the first load-holding valve 4 adjusts the amount of fluid passing to tank from the first end 5 of the hydraulic cylinder 2 to control the speed of the hydraulic cylinder 2. The position of the second load-holding valve 6 is set to a fully open position.

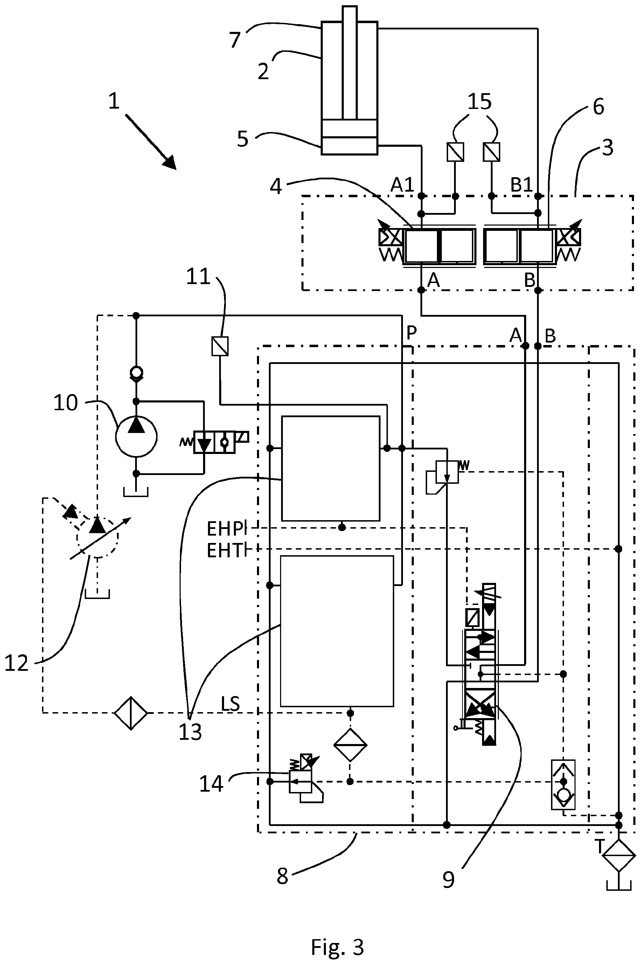

Fig. 3 schematically shows a hydraulic system 1 according to a second example not covered by the claimed invention, with the hydraulic system 1 in an inactive state.

In the second example, a differential pressure over the load-holding valve arrangement 3 is measured using a differential pressure sensor 15 or two pressure sensors. A predefined differential pressure can be used instead of the measurements from the hydraulic cylinder position and speed sensor of the first example.

When the differential pressure over the load-holding valve arrangement 3 is used to control the operation of the hydraulic system 1, a pre-determined differential pressure is set. In this example, the second and third modes operate simultaneously. The counter pressure experienced by the hydraulic system when the system operates without a load is reduced and when the system operates with a load, the load assists with the movement of the hydraulic cylinder.

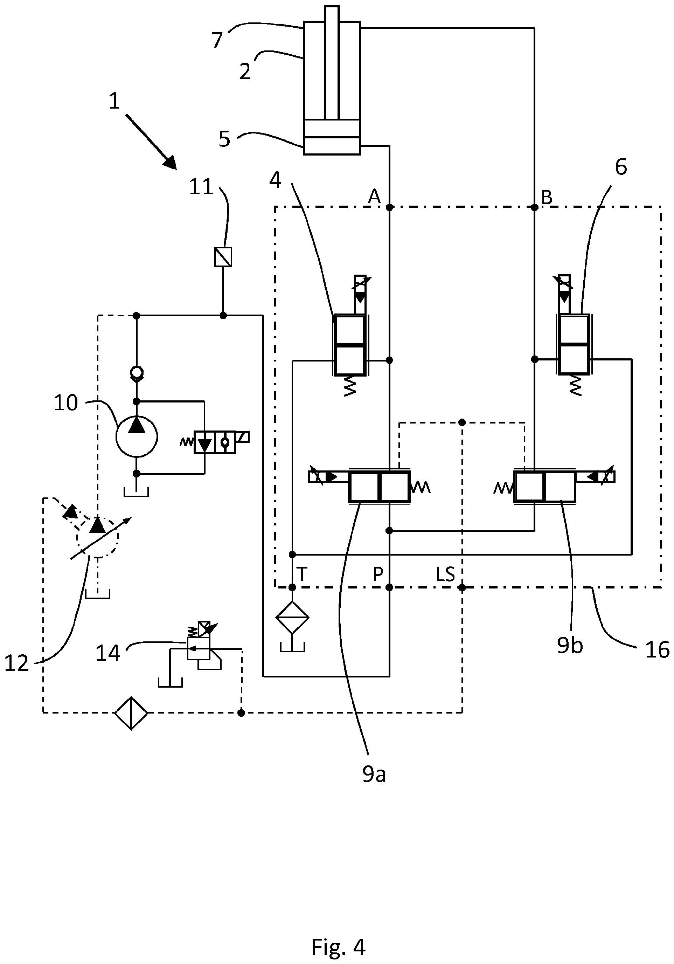

Fig. 4 schematically shows a hydraulic system 1 according to a third example embodiment not covered by the claimed invention, with the system 1 in an inactive state. The hydraulic system 1 of figure 4 differs from the hydraulic system 1 in figure 1 in that the hydraulic system 1 of figure 4 comprises a combined load-holding and directional flow-control valve arrangement 16. The combined load-holding and directional flow-control valve arrangement 16 comprises a load-holding valve arrangement 3 comprising first and second load-holding valves 4, 6 and a directional flow-control valve 9 comprising first and second directional flow-control valves 9a, 9b.

The first and second load-holding valves 4, 6 of the combined load-holding and directional flow-control valve arrangement 16 are electronically operated, proportional valves. The first and second directional flow-control valves 9a, 9b of the combined load-holding and directional flow-control valve arrangement 16 are electronically operated, proportional valves. The first and second load-holding valves 4, 6 and first and second directional flow-control valves 9a, 9b can be operated in other ways. They can e.g. be direct-acting, pilot-operated or servo-operated. The following description illustrates the functions of the hydraulic system 1 during the three different modes. It is assumed that the hydraulic cylinder 2 is operating with a load attached to the hydraulic cylinder 2 and that the hydraulic cylinder 2 has a range of motion where the load moves over centre.

The geometry of the hydraulic system 1 defines the maximum pressure for each different position of the hydraulic cylinder 2 and the pressure can be different in outwards or inwards movement. The flowrates into and out from the hydraulic cylinder 2 can be adjusted as well. The number of flowrates is only limited by the resolution of the hydraulic cylinder position and speed sensor.

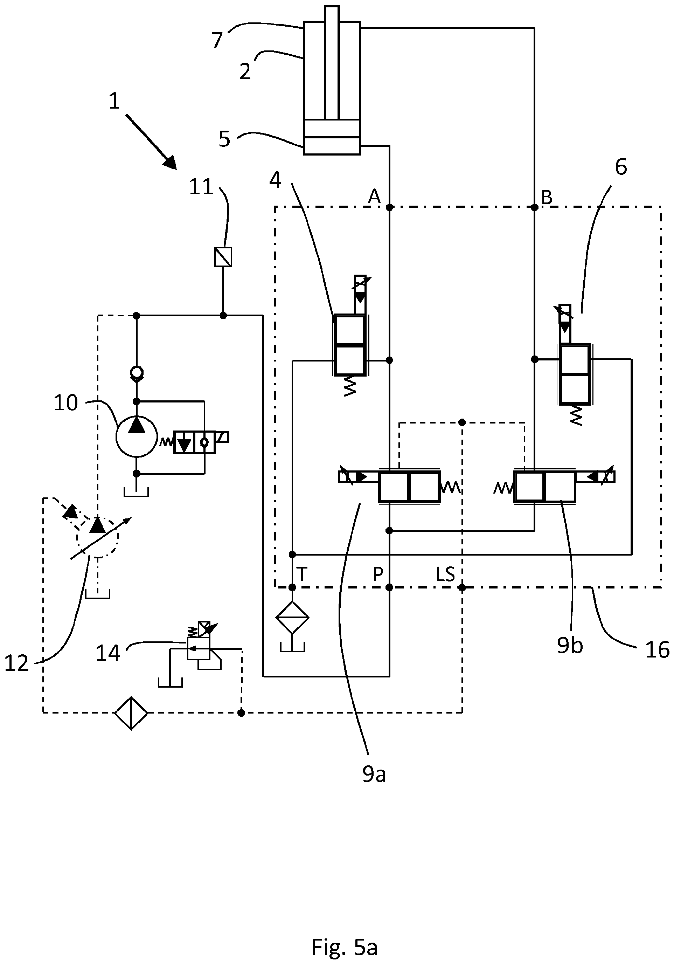

Fig. 5a schematically shows a hydraulic system according to a third example embodiment not covered by the claimed invention, with the first mode of the hydraulic system 1 activated. In the first mode, or pushing/pulling mode, an operator has input a desired extension or retraction speed for the hydraulic cylinder 2 by means of an operator controller (not shown). The working pressure in the hydraulic system 1 is measured by the pressure sensor 11. If the measured pressure is lower than a first pressure needed to move the hydraulic cylinder 2 at the desired extension or retraction speed with the load attached to it, a load from the hydraulic cylinder 2 is identified to determine the first pressure and the position of the first and second directional flow-control valves 9a, 9b are adjusted to provide flow to extend the hydraulic cylinder 2. As the first and second directional flow-control valves 9a, 9b are proportional valves, the first and second directional flow-control valves 9a, 9b are used to control the speed of the hydraulic cylinder 2. The position of the first load-holding valve 4 is set to its closed position allowing fluid to pass through to the first end 5 of the hydraulic cylinder 2. The position of the second load-holding valve 6 is set to a fully open position allowing fluid to pass through to tank.

The method can be performed in a hydraulic system with or without load-sensing. A system with load-sensing is more energy efficient than a system without, but energy usage is reduced also in a system without load-sensing.

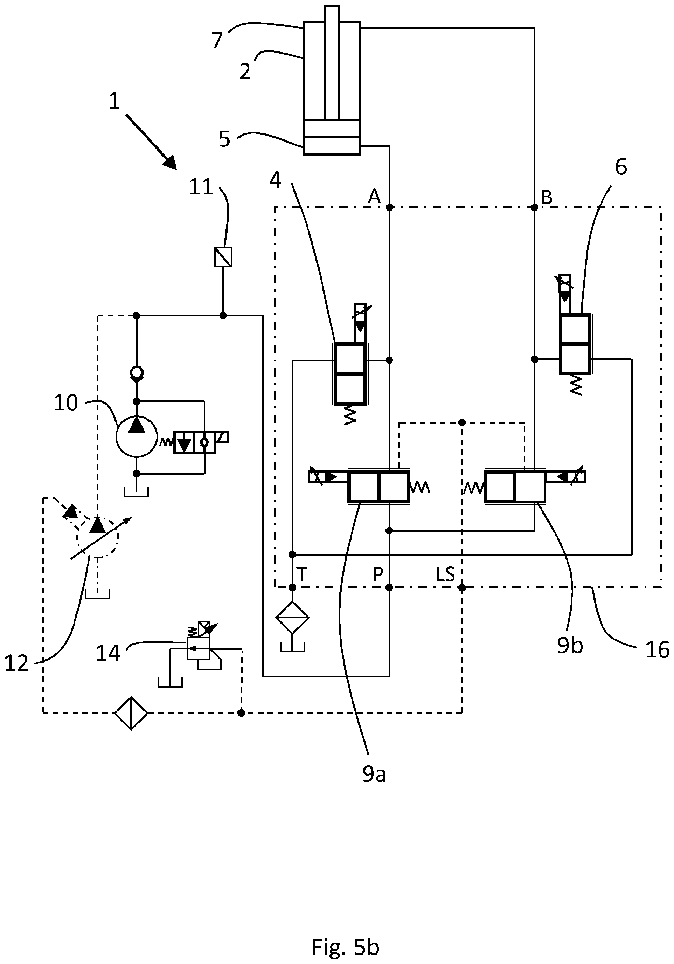

Fig. 5b schematically shows a hydraulic system according to a third example embodiment not covered by the claimed invention, with the second mode of the hydraulic system activated. The second mode can also be referred to a neutral movement mode, and is used when the hydraulic cylinder 2 works in light conditions, e.g. with the load close to centre after having passed centre in a longitudinal motion in either direction. The second mode is activated if the measured working pressure decreases, and if the speed of the hydraulic cylinder 2 is constant or increasing relative the desired extension or retraction speed input by the operator controller. In the second mode, the position of the first and second directional flow-control valves 9a, 9b are adjusted to provide fluid to the second end 7 of the hydraulic cylinder 2. The position of the first and second directional flow-control valves 9a, 9b and the first load-holding valve 4 are adjusted simultaneously to control the speed of the hydraulic cylinder 2 with the first load-holding valve 4 adjusting the amount of fluid passing to tank and the first and second directional flow-control valves 9a, 9b adjusting the amount of fluid passing to the second end 7 of the hydraulic cylinder 2. The position of the second load-holding valve 6 is set to a closed position allowing fluid to pass through to the second end 7 of the hydraulic cylinder 2.

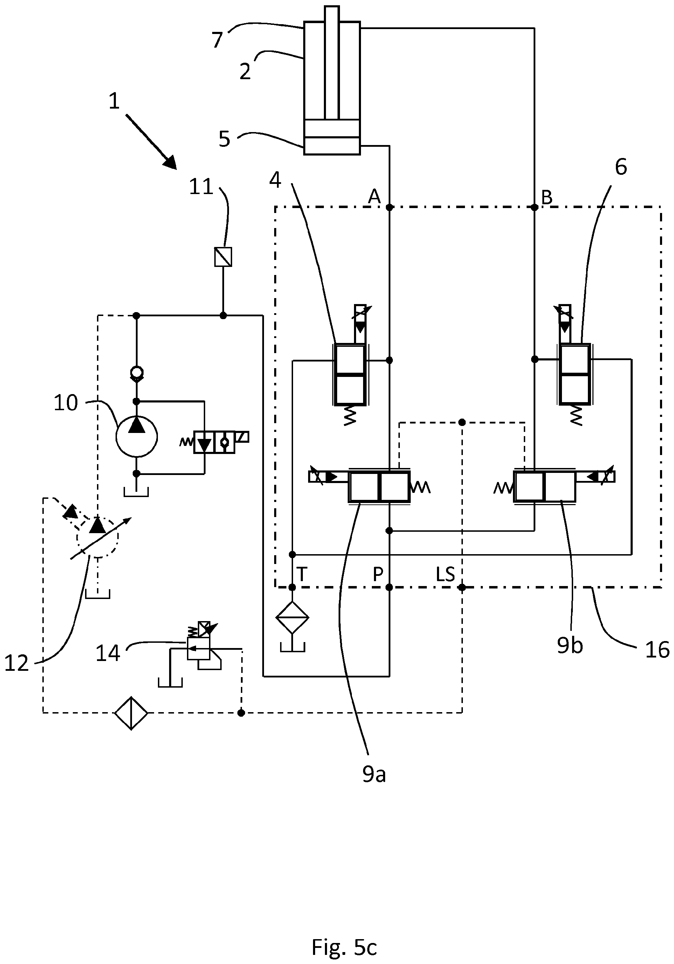

Fig. 5c schematically shows a hydraulic system according to a third example embodiment not covered by the claimed invention, with the third mode of the hydraulic system activated. The third mode is a gravity assisted movement mode and is used when the load accelerates the hydraulic cylinder 2 by means of gravity. When the first and second directional flow-control valves 9a, 9b are fully open and the measured working pressure is lowerthan a pre-set pressure for the desired speed of the hydraulic cylinder 2, this indicates that the hydraulic cylinder 2 moves by its own weight or is said to be gravity assisted. The position of the first and second directional flow-control valve 9a, 9b is set to open centre, i.e. ports A and B are connected to tank, and the first load-holding valve 4 adjusts the amount of fluid passing to tank from the first end 5 of the hydraulic cylinder 2 to control the speed of the hydraulic cylinder 2. The position of the second load-holding valve 6 is set to a fully open position.

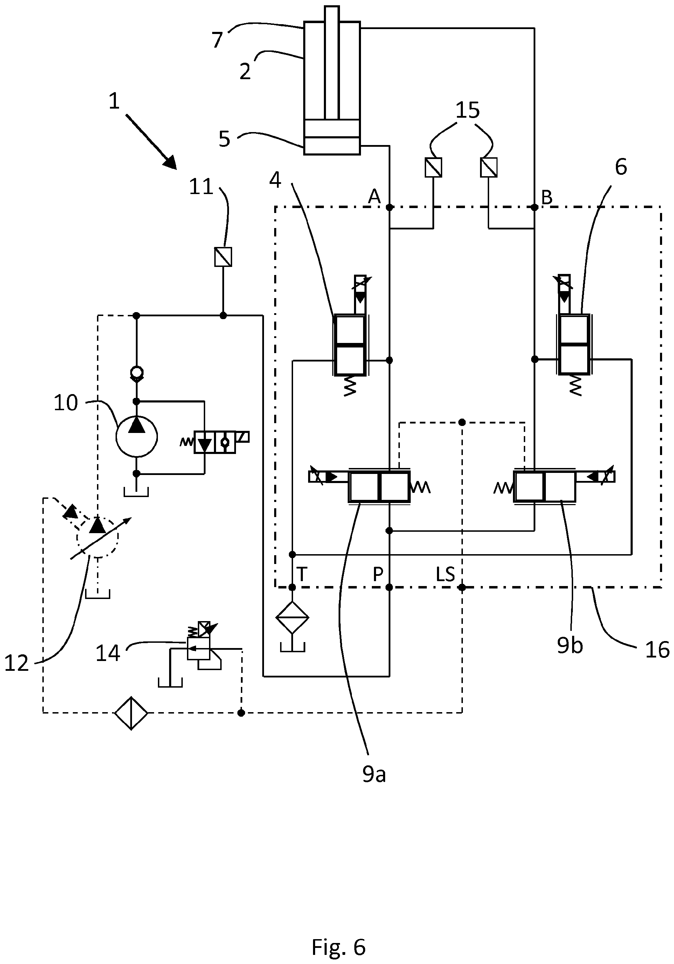

Fig. 6 schematically shows a hydraulic system according to a fourth example embodiment not covered by the claimed invention, with the hydraulic system 1 in an inactive state.

In the second example, a differential pressure over the load-holding valve arrangement 3 is measured using a differential pressure sensor 15 or two pressure sensors. A predefined differential pressure can be used instead of the measurements from the hydraulic cylinder position and speed sensor of the first example.

When the differential pressure over the load-holding valve arrangement 3 is used to control the operation of the hydraulic system 1, a pre-determined differential pressure is set. In this example, the second and third modes operate simultaneously. The counter pressure experienced by the hydraulic system when the system operates without a load is reduced and when the system operates with a load, the load assists with the movement of the hydraulic cylinder.

Reference signs mentioned in the claims should not be seen as limiting the extent of the matter protected by the claims, and their sole function is to make the claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Method for controlling the speed and pressure of a hydraulic cylinder (2) in a hydraulic system (1), wherein the hydraulic system (1) comprises a hydraulic cylinder (2) fluidly connected to a load-holding valve arrangement (3) comprising a first load-holding valve (4) connected to a first end (5) of the hydraulic cylinder (2) and a second load-holding valve (6) connected to a second end (7) of the hydraulic cylinder (2), a flow-control valve arrangement (8) comprising a directional flow-control valve (9) and at least one hydraulic pump (10), wherein the method comprises:
- Inputting a desired extension or retraction speed for the hydraulic cylinder (2) by means of an operator controller,
- Measuring a working pressure within the hydraulic system (1), and
- Measuring a speed of the hydraulic cylinder (2),
- depending on the measured working pressure and the speed of the hydraulic cylinder (2),
- Setting the hydraulic system (1) to operate in a first mode, a second mode or a third mode, wherein the extension or retraction speed of the hydraulic cylinder (2) is controlled by adjusting the position of the directional flow-control valve (9), the first load-holding valve (4) and the second load-holding valve (6), wherein the first mode is a pushing/pulling mode, the second mode is a neutral movement mode and the third mode is a gravity assisted movement mode,
wherein when activating the first mode, the position of the directional flow-control valve (9) is adjusted to control the speed of the hydraulic cylinder (2), the position of the first load-holding valve (4) is set to a closed position and the position of the second load-holding valve (6) is set to a fully open position,
wherein when activating the second mode, the position of the directional flow-control valve (9) and the first load-holding valve (4) is adjusted to control the speed of the hydraulic cylinder (2) and the position of the second load-holding valve (6) is set to a closed position,
wherein when activating the third mode, the position of the directional flow-control valve (9) is set to centre and the first load-holding valve (4) is adjusted to control the speed of the hydraulic cylinder (2) and the position of the second load-holding valve (6) is set to a fully open position, **characterized in that** the method comprises:
- if the measured working pressure within the hydraulic system (1) is lower than a first pressure needed to move the hydraulic cylinder (2) at the desired extension or retraction speed,
-activating the first mode wherein a load from the hydraulic cylinder (2) is identified to determine the first pressure, increasing the working pressure by means of the at least one hydraulic pump (10),
- if the measured working pressure decreases, and if the speed of the hydraulic cylinder (2) is constant or increasing relative the desired extension or retraction speed,
-activating the second mode,
- if the measured working pressure and the speed of the hydraulic cylinder (2) indicates that the hydraulic system (1) moves by its own weight,
activating the third mode wherein the at least one hydraulic pump (10) is shut off.

2. Method according to any one of the preceding claims, wherein the hydraulic system (1) further comprises a proportional pressure limiter (14), wherein the method further comprises:
- in the first mode, adjusting the pressure in the hydraulic system (1) by means of the proportional pressure limiter (14).

3. Method according to any one of the preceding claims, wherein the method comprises:
- Transitioning seamlessly between the first, second and or third mode depending on the measured working pressure and the speed of the hydraulic cylinder (2).

4. A hydraulic system (1) comprising a hydraulic cylinder (2) fluidly connected to a load-holding valve arrangement (3) comprising a first load-holding valve (4) connected to a first end (5) of the hydraulic cylinder (2) and a second load-holding valve (6) connected to a second end (7) of the hydraulic cylinder (2), a flow-control valve arrangement (8) comprising a directional flow-control valve (9) and at least one hydraulic pump (10), a working pressure sensor (11) and a hydraulic cylinder position and speed sensor , wherein the hydraulic system (1) is configured for activating a first mode, a second mode and a third mode, wherein, in each mode, a desired extension or retraction speed of the hydraulic cylinder (2) is controlled by adjusting the position of the directional flow-control valve (9), the first load-holding valve (4) and the second load-holding valve (6) depending on a measured working pressure in the hydraulic system (1) and a measured speed of the hydraulic cylinder (2), wherein the first mode is a pushing/pulling mode, the second mode is a neutral movement mode and the third mode is a gravity assisted movement mode, wherein when activating the first mode, the position of the directional flow-control valve (9) is adjusted to control the speed of the hydraulic cylinder (2), the position of the first load-holding valve (4) is set to a closed position and the position of the second load-holding valve (6) is set to a fully open position,
wherein when activating the second mode, the position of the directional flow-control valve (9) and the first load-holding valve (4) is adjusted to control the speed of the hydraulic cylinder (2) and the position of the second load-holding valve (6) is set to a closed position,
wherein when activating the third mode, the position of the directional flow-control valve (9) is set to centre and the first load-holding valve (4) is adjusted to control the speed of the hydraulic cylinder (2) and the position of the second load-holding valve (6) is set to a fully open position, **characterized in that**:
wherein the system is configured for activating the first mode if the measured working pressure within the hydraulic system (1) is lower than a first pressure needed to move the hydraulic cylinder (2) at the desired extension or retraction speed, wherein a load from the hydraulic cylinder (2) is identified by the hydraulic system (1) to determine a first pressure needed to move the hydraulic cylinder (2) at a desired extension or retraction speed, increasing the working pressure by means of the at least one hydraulic pump (10),
wherein the system is configured for activating the second mode if the measured working pressure decreases and if the speed of the hydraulic cylinder (2) is constant or increasing relative the desired extension or retraction speed,
wherein the system is configured for activating the third mode if the measurement of the hydraulic cylinder (2) indicates that it moves by its own weight, wherein the at least one hydraulic pump (10) is shut off.

5. Hydraulic system (1) according to claim 4, wherein the load-holding valve arrangement (3) is separate from or integrated with the flow-control valve arrangement (8).

6. Hydraulic system (1) according to any one of the claims 4 or 5, wherein the hydraulic system (1) further comprises a proportional pressure limiter (14) arranged to adjust the pressure in the hydraulic system (1), when in the first mode.

7. Vehicle comprising a hydraulic system according to any one of claims 4-6.

## Patentansprüche

1. Verfahren zur Steuerung der Geschwindigkeit und des Drucks eines hydraulischen Zylinders (2) in einem Hydrauliksystem (1), wobei das Hydrauliksystem (1) einen hydraulischen Zylinder (2) umfasst, der mit einer Lasthalteventilanordnung (3) fluidisch verbunden ist, die ein erstes Lasthalteventil (4), das mit einem ersten Ende (5) des hydraulischen Zylinders (2) verbunden ist, und ein zweites Lasthalteventil (6), das mit einem zweiten Ende (7) des hydraulischen Zylinders (2) verbunden ist, umfasst, indem eine Stromregelventilanordnung (8) ein gerichtetes Stromregelventil (9) und mindestens eine Hydraulikpumpe (10) umfasst, wobei das Verfahren Folgendes umfasst:
- Eingeben einer gewünschten Verlängerungs- oder Einziehungsgeschwindigkeit für den hydraulischen Zylinder (2) mittels einer Betreibersteuereinheit,
- Messen eines Arbeitsdrucks im Hydrauliksystem (1) und
- Messen einer Geschwindigkeit des hydraulischen Zylinders (2),
- abhängig von dem gemessenen Arbeitsdruck und der Geschwindigkeit des hydraulischen Zylinders (2),
- Einstellen des Hydrauliksystems (1), um in einer ersten Betriebsart, einer zweiten Betriebsart oder einer dritten Betriebsart in Betrieb zu sein, wobei die Verlängerungs- oder Einziehungsgeschwindigkeit des hydraulischen Zylinders (2) durch ein Anpassen der Position des gerichteten Stromregelventils (9), des ersten Lasthalteventils (4) und des zweiten Lasthalteventils (6) gesteuert wird, wobei die erste Betriebsart eine Drücken/Ziehen-Betriebsart ist, die zweite Betriebsart eine neutrale Bewegung-Betriebsart ist und die dritte Betriebsart eine schwerkraftunterstützte Bewegung-Betriebsart ist,
wobei, beim Aktivieren der ersten Betriebsart, die Position des gerichteten Stromregelventils (9) angepasst wird, um die Geschwindigkeit des hydraulischen Zylinders (2) zu steuern, die Position des ersten Lasthalteventils (4) zu einer geschlossenen Position eingestellt wird, und die Position des zweiten Lasthalteventils (6) zu einer völlig offenen Position eingestellt wird, wobei, beim Aktivieren der zweiten Betriebsart, die Position des gerichteten Stromregelventils (9) und des ersten Lasthalteventils (4) angepasst wird, um die Geschwindigkeit des hydraulischen Zylinders (2) zu steuern, und die Position des zweiten Lasthalteventils (6) zu einer geschlossenen Position eingestellt wird,
wobei, beim Aktivieren der dritten Betriebsart, die Position des gerichteten Stromregelventils (9) zu einem Zentrum eingestellt wird, und das erste Lasthalteventil (4) angepasst wird, um die Geschwindigkeit des hydraulischen Zylinders (2) zu steuern, und die Position des zweiten Lasthalteventils (6) zu einer völlig offenen Position eingestellt wird, **dadurch gekennzeichnet, dass** das Verfahren Folgendes umfasst:
- wenn der gemessene Arbeitsdruck im Hydrauliksystem (1) niedriger als ein erster zum Bewegen des hydraulischen Zylinders (2) bei der gewünschten Verlängerungs- oder Einziehungsgeschwindigkeit erforderlicher Druck ist,
- Aktivieren der ersten Betriebsart, wobei eine Last vom hydraulischen Zylinder (2) identifiziert wird, um den ersten Druck zu ermitteln, Erhöhen des Arbeitsdrucks mittels der mindestens einen Hydraulikpumpe (10),
- wenn der gemessene Arbeitsdruck abnimmt, und wenn die Geschwindigkeit des hydraulischen Zylinders (2) konstant ist oder ansteigt im Verhältnis zur gewünschten Verlängerungs- oder Einziehungsgeschwindigkeit,
- Aktivieren der zweiten Betriebsart,
- wenn der gemessene Arbeitsdruck und die Geschwindigkeit des hydraulischen Zylinders (2) anzeigt, dass das Hydrauliksystem (1) sich durch das eigene Gewicht bewegt,
- Aktivieren der dritten Betriebsart, wobei die mindestens eine Hydraulikpumpe (10) abgeschaltet wird.

2. Verfahren nach einem der vorgehenden Ansprüche, wobei das Hydrauliksystem (1) weiter einen proportionalen Druckbegrenzer (14) umfasst, wobei das Verfahren weiter Folgendes umfasst:
- in der ersten Betriebsart, Anpassen des Drucks im Hydrauliksystem (1) mittels des proportionalen Druckbegrenzers (14).

3. Verfahren nach einem der vorhergehenden Ansprüche, wobei das Verfahren Folgendes umfasst:
- übergangsloses Wechseln zwischen der ersten, zweiten und oder dritten Betriebsart abhängig von dem gemessenen Arbeitsdruck und der Geschwindigkeit des hydraulischen Zylinders (2).

4. Hydrauliksystem (1), umfassend einen hydraulischen Zylinder (2), der mit einer Lasthalteventilanordnung (3) fluidisch verbunden ist, die ein erstes Lasthalteventil (4), das mit einem ersten Ende (5) des hydraulischen Zylinders (2) verbunden ist, und ein zweites Lasthalteventil (6), das mit einem zweiten Ende (7) des hydraulischen Zylinders (2) verbunden ist, umfasst, indem eine Stromregelventilanordnung (8) ein gerichtetes Stromregelventil (9) und mindestens eine Hydraulikpumpe (10), einen Arbeitsdrucksensor (11) und einen Sensor der Position und Geschwindigkeit des hydraulischen Zylinders umfasst, wobei das Hydrauliksystem (1) dafür ausgelegt ist, eine erste Betriebsart, eine zweite Betriebsart und eine dritte Betriebsart zu aktivieren, wobei, in jeder Betriebsart, eine gewünschte Verlängerungs- oder Einziehungsgeschwindigkeit des hydraulischen Zylinders (2) durch Anpassen der Position des gerichteten Stromregelventils (9), des ersten Lasthalteventils (4) und des zweiten Lasthalteventils (6) gesteuert wird, abhängig von einem gemessenen Arbeitsdruck im Hydrauliksystem (1) und einer gemessenen Geschwindigkeit des hydraulischen Zylinders (2), wobei die erste Betriebsart eine Drücken/Ziehen-Betriebsart ist, die zweite Betriebsart eine neutrale Bewegung-Betriebsart ist und die dritte Betriebsart eine schwerkraftunterstützte Bewegung-Betriebsart ist, wobei, beim Aktivieren der ersten Betriebsart, die Position des gerichteten Stromregelventils (9) angepasst wird, um die Geschwindigkeit des hydraulischen Zylinders (2) zu steuern, die Position des ersten Lasthalteventils (4) zu einer geschlossenen Position eingestellt wird, und die Position des zweiten Lasthalteventils (6) zu einer völlig offenen Position eingestellt wird,
wobei, beim Aktivieren der zweiten Betriebsart, die Position des gerichteten Stromregelventils (9) und des ersten Lasthalteventils (4) angepasst wird, um die Geschwindigkeit des hydraulischen Zylinders (2) zu steuern, und die Position des zweiten Lasthalteventils (6) zu einer geschlossenen Position eingestellt wird,
wobei, beim Aktivieren der dritten Betriebsart, die Position des gerichteten Stromregelventils (9) zu einem Zentrum eingestellt wird und das erste Lasthalteventil (4) angepasst wird, um die Geschwindigkeit des hydraulischen Zylinders (2) zu steuern, und die Position des zweiten Lasthalteventils (6) zu einer völlig offenen Position eingestellt wird, **dadurch gekennzeichnet, dass**:
wobei das System zum Aktivieren der ersten Betriebsart ausgelegt ist, wenn der gemessene Arbeitsdruck im Hydrauliksystem (1) niedriger als ein erster zum Bewegen des hydraulischen Zylinders (2) bei der gewünschten Verlängerungs- oder Einziehungsgeschwindigkeit erforderlicher Druck ist, wobei eine Last vom hydraulischen Zylinder (2) durch das Hydrauliksystem (1) identifiziert wird, um einen ersten zum Bewegen des hydraulischen Zylinders (2) bei einer gewünschten Verlängerungs- oder Einziehungsgeschwindigkeit erforderlichen Druck zu ermitteln, Erhöhen des Arbeitsdrucks mittels der mindestens einen Hydraulikpumpe (10),
wobei das System zum Aktivieren der zweiten Betriebsart ausgelegt ist, wenn der gemessene Arbeitsdruck abnimmt, und wenn die Geschwindigkeit des hydraulischen Zylinders (2) konstant ist oder ansteigt im Verhältnis zur gewünschten Verlängerungs- oder Einziehungsgeschwindigkeit,
wobei das System zum Aktivieren der dritten Betriebsart ausgelegt ist, wenn die Messung des hydraulischen Zylinders (2) anzeigt, dass es sich durch das eigene Gewicht bewegt, wobei die mindestens eine Hydraulikpumpe (10) abgeschaltet wird.

5. Hydrauliksystem (1) nach Anspruch 4, wobei die Lasthalteventilanordnung (3) von der Stromregelventilanordnung (8) getrennt ist oder damit integriert ist.

6. Hydrauliksystem (1) nach einem der Ansprüche 4 oder 5, wobei das Hydrauliksystem (1) weiter einen proportionalen Druckbegrenzer (14) umfasst, der zum Anpassen des Drucks im Hydrauliksystem (1) in der ersten Betriebsart eingerichtet ist.

7. Fahrzeug umfassend ein Hydrauliksystem nach einem der Ansprüche 4-6.

## Revendications

1. Procédé de commande de la vitesse et de la pression d'un cylindre hydraulique (2) dans un système hydraulique (1), dans lequel le système hydraulique (1) comprend un cylindre hydraulique (2) en communication fluidique avec un agencement de soupape de maintien de charge (3) comprenant un première soupape de maintien de charge (4) reliée à une première extrémité (5) du cylindre hydraulique (2) et une deuxième soupape de maintien de charge (6) reliée à une deuxième extrémité (7) du cylindre hydraulique (2), un agencement de soupape de régulation de débit (8) comprenant une soupape de régulation de débit directionnelle (9) et au moins une pompe hydraulique (10), dans lequel le procédé comprend :
- l'entrée d'une vitesse d'extension ou de rétraction souhaitée pour le cylindre hydraulique (2) au moyen d'un contrôleur d'opérateur,
- la mesure d'une pression de travail à l'intérieur du système hydraulique (1), et
- la mesure d'une vitesse du cylindre hydraulique (2),
- en fonction de la pression de travail mesurée et de la vitesse du cylindre hydraulique (2),
- le réglage du système hydraulique (1) pour fonctionner dans un premier mode, un deuxième mode ou un troisième mode, dans lequel la vitesse d'extension ou de rétraction du cylindre hydraulique (2) est commandée en ajustant la position de la soupape de régulation de débit directionnelle (9), de la première soupape de maintien de charge (4) et de la deuxième soupape de maintien de charge (6), le premier mode étant un mode de poussée / traction, le deuxième mode étant un mode de mouvement neutre et le troisième mode étant un mode de mouvement assisté par gravité,
dans lequel lors de l'activation du premier mode, la position de la soupape de régulation de débit directionnelle (9) est réglée pour commander la vitesse du cylindre hydraulique (2), la position de la première soupape de maintien de charge (4) est réglée à une position fermée, et la position de la deuxième soupape de maintien de charge (6) est réglée à une position complètement ouverte,
dans lequel lors de l'activation du deuxième mode, la position de la soupape de régulation de débit directionnelle (9) et de la première soupape de maintien de charge (4) est réglée pour commander la vitesse du cylindre hydraulique (2), et la position de la deuxième soupape de maintien de charge (6) est réglée à une position fermée,
dans lequel lors de l'activation du troisième mode, la position de la soupape de régulation de débit directionnelle (9) est réglée au centre, et la première soupape de maintien de charge (4) est réglée pour commander la vitesse du cylindre hydraulique (2), et la position de la deuxième soupape de maintien de charge (6) est réglée à une position complètement ouverte, **caractérisé en ce que** le procédé comprend les étapes consistant à :
- si la pression de travail mesurée à l'intérieur du système hydraulique (1) est inférieure à une première pression nécessaire pour déplacer le cylindre hydraulique (2) à la vitesse d'extension ou de rétraction souhaitée,
- activer le premier mode dans lequel une charge du cylindre hydraulique (2) est identifiée pour déterminer la première pression, augmenter la pression de travail au moyen de l'au moins une pompe hydraulique (10),
- si la pression de travail mesurée diminue, et si la vitesse du cylindre hydraulique (2) est constante ou augmentée par rapport à la vitesse d'extension ou de rétraction souhaitée,
- activer le deuxième mode,
- si la pression de travail mesurée et la vitesse du cylindre hydraulique (2) indiquent que le système hydraulique (1) se déplace par son propre poids,
- activer le troisième mode dans lequel l'au moins une pompe hydraulique (10) est coupée.

2. Procédé selon l'une quelconque des revendications précédentes, dans lequel le système hydraulique (1) comprend en outre un limiteur de pression proportionnel (14), dans lequel le procédé comprend en outre :
- dans le premier mode, le réglage de la pression dans le système hydraulique (1) au moyen du limiteur de pression proportionnel (14).

3. Procédé selon l'une quelconque des revendications précédentes, dans lequel le procédé comprend :
- la transition sans coupure entre le premier, le deuxième et / ou le troisième mode en fonction de la pression de travail mesurée et de la vitesse du cylindre hydraulique (2).

4. Système hydraulique (1) comprenant un cylindre hydraulique (2) en communication fluidique avec un agencement de soupape de maintien de charge (3) comprenant un première soupape de maintien de charge (4) reliée à une première extrémité (5) du cylindre hydraulique (2) et une deuxième soupape de maintien de charge (6) reliée à une deuxième extrémité (7) du cylindre hydraulique (2), un agencement de soupape de régulation de débit (8) comprenant une soupape de régulation de débit directionnelle (9) et au moins une pompe hydraulique (10), un capteur de pression de travail (11) et un capteur de position et de vitesse de cylindre hydraulique, dans lequel le système hydraulique (1) est configuré pour activer un premier mode, un deuxième mode ou un troisième mode, dans lequel, dans chaque mode, une vitesse d'extension ou de rétraction souhaitée du cylindre hydraulique (2) est commandée en ajustant la position de la soupape de régulation de débit directionnelle (9), de la première soupape de maintien de charge (4) et de la deuxième soupape de maintien de charge (6) en fonction de la pression de travail mesurée dans le système hydraulique (1) et d'une vitesse mesurée du cylindre hydraulique (2), dans lequel le premier mode est un mode de poussée / traction, le deuxième mode est un mode de mouvement neutre et le troisième mode est un mode de mouvement assisté par gravité, dans lequel, lors de l'activation du premier mode, la position de la soupape de régulation de débit directionnelle (9) est réglée pour commander la vitesse du cylindre hydraulique (2), la position de la première soupape de maintien de charge (4) est réglée à une position fermée et la position de la deuxième soupape de maintien de charge (6) est réglée à une position complètement ouverte,
dans lequel lors de l'activation du deuxième mode, la position de la soupape de régulation de débit directionnelle (9) et de la première soupape de maintien de charge (4) est réglée pour commander la vitesse du cylindre hydraulique (2), et la position de la deuxième soupape de maintien de charge (6) est réglée à une position fermée,
dans lequel lors de l'activation du troisième mode, la position de la soupape de commande de débit directionnel (9) est réglée au centre et la première soupape de maintien de charge (4) est réglée pour commander la vitesse du cylindre hydraulique (2), et la position de la deuxième soupape de maintien de charge (6) est réglée à une position complètement ouverte, **caractérisé en ce que** :
dans lequel le système est configuré pour activer le premier mode si la pression de travail mesurée à l'intérieur du système hydraulique (1) est inférieure à une première pression nécessaire pour déplacer le cylindre hydraulique (2) à la vitesse d'extension ou de rétraction souhaitée, dans lequel une charge du cylindre hydraulique (2) est identifiée par le système hydraulique (1) pour déterminer une première pression nécessaire pour déplacer le cylindre hydraulique (2) à une vitesse d'extension ou de rétraction souhaitée, augmenter la pression de travail au moyen de l'au moins une pompe hydraulique (10),
dans lequel le système est configuré pour activer le deuxième mode si la pression de travail mesurée diminue, et si la vitesse du cylindre hydraulique (2) est constante ou augmentée par rapport à la vitesse d'extension ou de rétraction souhaitée,
dans lequel le système est configuré pour activer le troisième mode si la mesure du cylindre hydraulique (2) indique qu'il se déplace par son propre poids,
dans lequel l'au moins une pompe hydraulique (10) est coupée.

5. Système hydraulique (1) selon la revendication 4, dans lequel l'agencement de soupape de maintien de charge (3) est séparé ou intégré à l'agencement de soupape de régulation de débit (8).

6. Système hydraulique (1) selon l'une quelconque des revendications 4 ou 5, dans lequel le système hydraulique (1) comprend en outre un limiteur de pression proportionnel (14) agencé pour ajuster la pression dans le système hydraulique (1), lorsqu'il est dans le premier mode.

7. Véhicule comprenant un système de véhicule selon l'une quelconque des revendications 4 à 6.
